# EUROPEAN PATENT APPLICATION

(11) **EP 4 050 570 A2**
(43) Date of publication of application: **31.08.2022**
(21) Application number: 22164741.5
(22) Date of filing: 28.03.2022
(51) Int. Cl.: G06V 10/74, G06N 3/04, G06V 10/764, G06V 10/774, G06V 10/82, G06V 20/54

(54) **METHOD FOR GENERATING IMAGE CLASSIFICATION MODEL, ROADSIDE DEVICE AND CLOUD CONTROL PLATFORM**

(30) Priority: 03.06.2021 CN 202110620624
(71) Applicant: Apollo Intelligent Connectivity (Beijing) Technology Co., Ltd., Beijing 100176 (CN)
(72) Inventor: XIA, Chunlong, Beijing, 100176 (CN)
(74) Representative: Lucke, Andreas

(57) **Abstract**

The present disclosure provides a method for generating an image classification model, a roadside device and a cloud control platform, and relates to the field of artificial intelligence such as intelligent traffic, deep learning and computer vision. A specific implementation of the method comprises: acquiring a target image and a first category and a second category of the target image, the first category being higher in level than the second category; determining a prediction probability of the first category of the target image; and performing training by using the target image and the first category and by using the target image, the prediction probability of the first category and the second category to obtain an image classification model.

## Description

### TECHNICAL FIELD

Embodiments of the present disclosure relate to the field of computer, specifically to the field of artificial intelligence such as intelligent traffic, deep learning and computer vision, and particularly to a method for generating an image classification model, a roadside device and a cloud control platform.

### BACKGROUND

Image classification, as one of the basic tasks of computer vision, has been extensively studied and has achieved exciting results. However, for some tasks having a high requirement such as a fine-grained classification, it is far from enough for these basic models to perform the tasks only by increasing the number of predicted categories. Accordingly, some fine classification methods are emerged, and some of these methods are to obtain a more refined classification feature with the help of a strategy such as a detection or a segmentation.

### SUMMARY

Embodiments of the present disclosure propose a method for generating an image classification model, a roadside device and a cloud control platform.

In a first aspect, embodiments of the present disclosure provide a method for generating an image classification model, comprising: acquiring a target image and a first category and a second category of the target image, the first category being higher in level than the second category; determining a prediction probability of the first category of the target image; and performing training by using the target image and the first category and by using the target image, the prediction probability of the first category and the second category to obtain an image classification model.

In a second aspect, embodiments of the present disclosure provide a method for classifying an image, comprising: acquiring a to-be-classified image; inputting an image feature of the to-be-classified image into the image classification model provided by the first aspect to obtain a category probability of a third category corresponding to the to-be-classified image and a category probability of a fourth category; and determining a target category of the to-be-classified image according to the category probability of the third category and the category probability of the fourth category.

In a third aspect, embodiments of the present disclosure provide an apparatus for generating an image classification model, comprising: an image acquiring module, configured to acquire a target image and a first category and a second category of the target image, the first category being higher in level than the second category; a probability determining module, configured to determine a prediction probability of the first category of the target image; and a model training module, configured to perform training by using the target image and the first category and by using the target image, the prediction probability of the first category and the second category to obtain an image classification model.

In a forth aspect, embodiments of the present disclosure provide an apparatus for classifying an image, comprising: an image acquiring module, configured to acquire a to-be-classified image; a probability obtaining module, configured to input an image feature of the to-be-classified image into the image classification model provided by the first aspect, to obtain a category probability of a third category corresponding to the to-be-classified image and a category probability of a fourth category; and a probability determining module, configured to determine a target category of the to-be-classified image according to the category probability of the third category and the category probability of the fourth category.

In a fifth aspect, embodiments of the present disclosure provide an electronic device, comprising: one or more processors; and a memory, storing one or more programs, wherein the one or more programs, when executed by the one or more processors, cause the one or more processors to implement the method provided by the first aspect or the second aspect.

In a sixth aspect, embodiments of the present disclosure provide a computer-readable medium, storing a computer program thereon, wherein the program, when executed by a processor, causes the processor to implement the method provided by the first aspect or the second aspect.

In a seventh aspect, an embodiment of the present disclosure provides a computer program product, comprising a computer program, wherein the computer program, when executed by a processor, implements the method provided by the first aspect or the second aspect.

In an eighth aspect, an embodiment of the present disclosure provides a roadside device, comprising the electronic device provided by the fifth aspect.

In a ninth aspect, an embodiment of the present disclosure provides a cloud control platform, comprising the electronic device provided by the fifth aspect.

According to the method for generating an image classification model, the roadside device and the cloud control platform that are provided in the embodiments of the present disclosure, the target image and the first category and the second category of the target image are first acquired, the first category being higher in level than the second category. Then, the prediction probability of the first category of the target image is determined. Finally, the training is performed by using the target image and the first category and by using the target image, the prediction probability of the first category and the second category, to obtain the image classification model. The training maybe performed by using the target image and the first category and by using the target image, the prediction probability of the first category and the second category, to obtain the image classification model. Accordingly, the first category may be learned first, and then the determination for the second category may be implemented according to the first category and the target image. For the image classification model, there is a process from fuzzy to fine, thereby enhancing the learning capability of the model.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

After reading detailed descriptions of non-limiting embodiments given with reference to the following accompanying drawings, other features, objectives and advantages of the present disclosure will be more apparent. The accompanying drawings are used for a better understanding of the scheme, and do not constitute a limitation to the present disclosure. Here:
Fig. 1 is a diagram of an exemplary system architecture in which the present disclosure may be applied;
Fig. 2 is a flowchart of an embodiment of a method for generating an image classification model according to the present disclosure;
Fig. 3 is a flowchart of an embodiment of the method for generating an image classification model according to the present disclosure;
Fig. 4 is a flowchart of an embodiment of the method for generating an image classification model according to the present disclosure;
Fig. 5 is a flowchart of an embodiment of a method for classifying an image according to the present disclosure;
Fig. 6 is a schematic diagram of an application scenario of the method for classifying an image according to the present disclosure;
Fig. 7 is a schematic diagram of an embodiment of an apparatus for generating an image classification model according to the present disclosure;
Fig. 8 is a schematic diagram of an embodiment of an apparatus for classifying an image according to the present disclosure; and
Fig. 9 is a block diagram of an electronic device used to implement the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

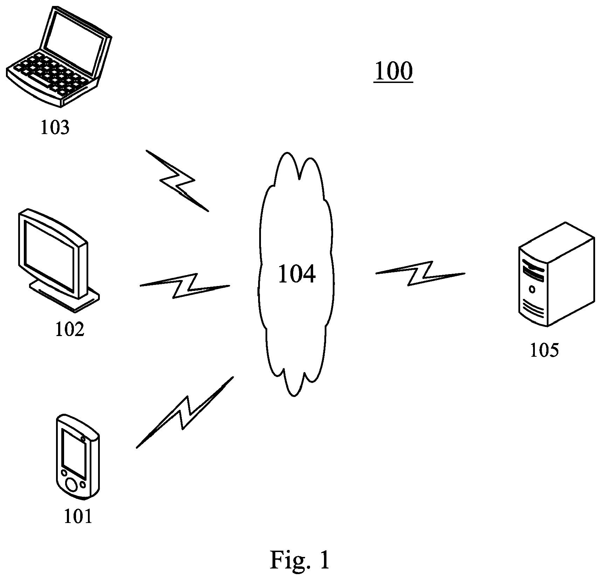

Fig. 1 illustrates an exemplary system architecture 100 in which an embodiment of a method and apparatus for generating an image classification model or a method and apparatus for classifying an image according to the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104, to receive or send a target image and a first category and a second category of the target image, etc. Various client applications and intelligent interaction applications (e.g., video related software, image related software and an image processing application) may be installed on the terminal devices 101, 102 and 103.

Here, the terminal devices 101, 102 and 103 may be hardware or software. When being the hardware, the terminal devices 101, 102 and 103 may be electronic products performing a human-machine interaction with the user by means of one or more of a keyboard, a touchpad, a display screen, a touch screen, a remote controller, voice interaction, a handwriting device, or the like. For example, the electronic products refer to a PC (Personal Computer), a mobile phone, a smartphone, a PDA (Personal Digital Assistant), a wearable device, a PPC (Pocket PC), a pad, an intelligent vehicle machine, a smart television, a smart speaker, a tablet computer, a laptop portable computer, a desktop computer, or the like. When being the software, the terminal devices 101, 102 and 103 may be installed in the above electronic devices. The terminal devices 101, 102 and 103 may be implemented as a plurality of pieces of software or a plurality of software modules, or may be implemented as a single piece of software or a single software module, which will not be specifically limited here.

The server 105 may provide various services. For example, the server 105 may acquire a target image on the terminal devices 101, 102 and 103 and a first category and a second category of the target image. Then, the server 105 may determine a prediction probability of the first category of the target image; and perform training by using the target image and the first category and by using the target image, the prediction probability of the first category and the second category, to obtain an image classification model.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically limited here.

It should be noted that the method for generating an image classification model or the method for classifying an image provided in the embodiments of the present disclosure is generally performed by the server 105. Correspondingly, the apparatus for generating an image classification model or the apparatus for classifying an image is generally provided in the server 105.

It should be appreciated that the numbers of the terminal devices, the networks and the servers in Fig. 1 are merely illustrative. Any number of terminal devices, networks and servers maybe provided based on actual requirements.

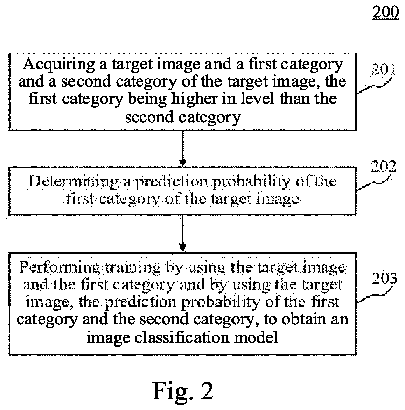

Further referring to Fig. 2, Fig. 2 illustrates a flow 200 of an embodiment of a method for generating an image classification model according to the present disclosure. The method for generating an image classification model may include the following steps:

Step 201, acquiring a target image and a first category and a second category of the target image.

In this embodiment, an executing body (e.g., the terminal devices 101, 102 and 103 shown in Fig. 1) of the method for generating an image classification model acquires the target image locally or remotely, for example, shoots the target image through a shooting apparatus, and the shooting apparatus may be a camera of the terminal devices or an external camera shooting apparatus external. Alternatively, an executing body (e.g., the server 105 shown in Fig. 1) of the method for generating an image classification model acquires the target image locally or from a terminal device (e.g., the terminal devices 101, 102 and 103 shown in Fig. 1). Thereafter, the executing body acquires the first category and the second category of the target image. Alternatively, the target image, the first category and the second category of the target image may be acquired simultaneously.

The number of first categories and the number of second categories may be respectively more than one, and "first" and "second" are only used to distinguish the first category from the second category, and are not used to limit the numbers and orders of the first and second categories.

Here, the first category may be higher in level than the second category, and the first category may further include at least one second category. The above first category may include a plurality of types, and the first category may be any category higher in level than the second category. The above second category may include a plurality of types.

It should be noted that the first category may refer to a plurality of categories obtained by clustering a plurality of images.

Step 202, determining a prediction probability of the first category of the target image.

In this embodiment, the above executing body may input the target image into a first classification network layer of an image classification model to obtain the prediction probability of the first category; or input the target image into an other classification model in the related art to obtain the prediction probability.

In this embodiment, the target image may be inputted into the image classification model to obtain the prediction probability of the first category of the target image.

Step 203, performing training by using the target image and the first category and by using the target image, the prediction probability of the first category and the second category to obtain an image classification model.

Specifically, after obtaining the target image and the first category and obtaining the target image and the second category, the above executing body may train a machine learning model by using the target image and the first category and by using the target image, the prediction probability of the first category and the second category, to obtain the image classification model. The above machine learning model may be a probability model, a classification model or other classifiers in the technology existing or developed in the future. For example, the machine learning model may include any of: a decision tree model (XGBoost), a logistic regression model (LR), a deep neural network model (DNN), and a gradient boosting decision tree model (GBDT). The above image classification model may be a multi-task learning model.

In an example, the steps of training the image classification model are as follows:

An input refers to training data and a label; and an output refers to a stored model.

Step 1, a network model is built and parameters are initialized according to Fig. 2, and the following loop process is performed:

Step 2, data is inputted into the model in batch for a forward propagation. Step 3, an error between an output obtained from Step 2 and a label (i.e., category) is calculated. Step 4, an error gradient is back-propagated to update a weight. Step 5, whether a storage condition is satisfied is determined, and if the condition is satisfied, the model this time is stored.

After the training for the image classification model is completed, a test process is started. The test process is as follows. Step 1, the trained and stored model is loaded sequentially. Step 2, to-be-inferred data is inputted into the model. Step 3, a result of the model is outputted. Step 4, if it is the first prediction or the result of the model is superior to the existing saved result, the final result is replaced with the test model and result this time.

It should be noted that, in this embodiment, the accurate classification for the image may be realized through the first category and the second category.

According to the method for generating an image classification model provided in the embodiment of the present disclosure, the target image and the first category and the second category of the target image are first acquired, the first category being higher in level than the second category. Then, the prediction probability of the first category of the target image is determined. Finally, the training is performed by using the target image and the first category and by using the target image, the prediction probability of the first category and the second category, to obtain the image classification model. The training may be performed by using the target image and the first category and by using the target image, the prediction probability of the first category and the second category, to obtain the image classification model. Accordingly, the first category may be learned first, and then the determination for the second category may be implemented according to the first category and the target image. For the image classification model, there is a process from fuzzy to fine, thereby enhancing the learning capability of the model.

In some alternative implementations of this embodiment, the acquiring a target image and a first category and a second category of the target image includes: acquiring the target image; acquiring the first category of the target image; and determining the second category of the target image according to the first category and the target image.

Correspondingly, in this example, the acquiring the first category of the target image may include: a manual annotation or a model output.

Correspondingly, in this example, the determining the second category of the target image according to the first category and the target image may include: classifying an image of which the category is the first category to obtain the second category. The number of first categories and the number of second categories may be respectively more than one, and "first" and "second" are only used to distinguish the first category from the second category, and are not used to limit the numbers and orders of the first and second categories.

Here, the first category may be higher in level than the second category, and the first category may further include at least one second category. The above first category may include a plurality of types, and the first category may be any category higher in level than the second category. The above second category may include a plurality of types.

In this implementation, the second category may further include a plurality of subcategories. For example, the second category may further include a third category 1, a third category 2, a third category 3, and the like. Here, the third category 1, the third category 2 and the third category 3 are lower in level than the second category.

It should be noted that a further division for the second category may be set according to the precision of the image classification or the demand of a user.

In this implementation, through the division of the first category and the second category, a hierarchical relationship between the first category and the second category may be further established to adequately mine the category features of the image.

In some alternative implementations of this embodiment, the determining the second category of the target image according to the first category and the target image may include: acquiring, from a preset image library, all images corresponding to the first category according to the first category; obtaining, from all the images corresponding to the first category, an image matching the target image according to the target image; and determining a second category of the image matching the target image as the second category of the target image.

In this embodiment, the above executing body may acquire, from the preset image library, all the images corresponding to the first category according to the first category; obtain, from all the images corresponding to the first category, the image matching the target image according to the target image; and determine the second category of the image matching the target image as the second category of the target image.

In this implementation, the above executing body may implement the determination for the second category of the target image according to the first category and the target image.

In some alternative implementations of this embodiment, the image classification model may include the first classification network layer. The determining a prediction probability of the first category of the target image may include: inputting the target image into the first classification network layer to obtain the prediction probability of the first category of the target image.

In this implementation, the determination for the prediction probability of the first category is implemented through the first classification network layer of the image classification model.

In some alternative implementations of this embodiment, the image classification model further includes a second classification network layer. The performing training by using the target image and the first category and by using the target image, the prediction probability of the first category and the second category to obtain an image classification model may include: using the target image as an input of the first classification network layer and using the first category as an expected output (i.e., outputting a true value or a label) of the first classification network layer; and using the target image and the prediction probability of the first category as an input of the second classification network layer, and using the second category as an expected output of the second classification network layer, to train a machine learning model, to obtain the image classification model.

In this implementation, the above executing body may first input the target image into the first classification network layer of the image classification model, to obtain the prediction probability of the first category of the target image; input the prediction probability of the first category of the target image and the target image into the second classification network layer of the image classification model, to obtain a prediction probability of the second category of the target image; construct a loss function corresponding to the first classification network layer by using the prediction probability of the first category and the first category; construct a loss function corresponding to the second classification network layer by using the prediction probability of the second category and the second category; and adjust the loss function corresponding to the first classification network layer and the loss function corresponding to the second classification network layer, to implement the training for the image classification model.

In this implementation, the image classification model may be a multi-task learning model.

It should be noted that the number of first classification network layers may be determined by the kind of the first category and the number of second classification network layers may be determined by the kind of the second category. Alternatively, the number of the first classification network layers corresponds to the number of kinds of first categories one by one, and the number of the second classification network layers corresponds to the number of kinds of second categories one by one.

In this implementation, the training for the image classification model may be implemented by using the first classification network layer and the second classification network layer that are included in the image classification model.

In some alternative implementations of this embodiment, a number of categories of the second category is a maximum number of categories in all second categories. Here, the first category includes all the second categories.

In this implementation, the number of categories of the second category may be the maximum number of categories in numbers of categories of all the second categories.

In an example, the first category A1 includes a second category ai, a second category a2 and a second category a3. The first category B1 includes a second category b1, a second category b2, a second category b3, a second category b4 and a second category b5. Here, the number of categories of the first category B1 is maximum, and the number of categories of the second category is determined as 5.

In this implementation, according to the screening for the second category, the second category with a small influence can be suppressed, and thus, the image feature of the second category may be further highlighted, and the determination for the category of the image can be further more accurately implemented.

In some alternative implementations of this embodiment, the first category may be a parent category and the second category may be a child category.

In this implementation, the image classification model may first predict an abstract (parent) category, and then select, according to the prediction probability of the parent category, a feature used for a prediction for a child category. The target is progressively restricted during training, thereby simplifying the difficulty of learning. In particular, when a multi-classification task is performed (e.g., a general classification of 100 kinds), according to the method for generating an image classification model in the present disclosure, the 100 kinds may be divided into 5 categories and 20 subcategories. In the inference prediction phase, the final prediction value is given according to the prediction result for the parent category and the prediction result for the child category, thereby simplifying the prediction difficulty. The advantages are as follows. 1) The difficulty of the algorithm for multi-category classification training and prediction is simplified. 2) Additional auxiliary information is not required, and thus, the performance of the general classification model is improved without substantially increasing the amount of computation and the number of parameters. 3) The image classification model may be embedded into an existing basic classification model without damage, to form a model that may perform a fine classification.

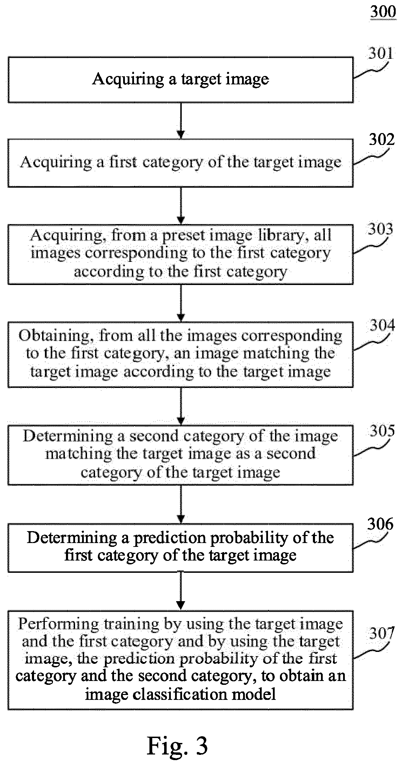

Further referring to Fig. 3, Fig. 3 illustrates a flow 300 of an embodiment of the method for generating an image classification model according to the present disclosure. The method for generating an image classification model may include the following steps:
Step 301, acquiring a target image.
Step 302, acquiring a first category of the target image.

In this embodiment, an executing body (e.g., the terminal devices 101, 102 and 103 or the server 105 shown in Fig. 1) of the method for generating an image classification model may acquire a manually annotated first category or a first category annotated through a model.

Step 303, acquiring, from a preset image library, all images corresponding to the first category according to the first category.

In this embodiment, the above executing body may acquire, from the preset image library, all the images corresponding to the first category according to the first category.

It should be noted that the preset image library may store a plurality of images of the first category, so as to query all the images corresponding to the first category from the preset image library.

Step 304, obtaining, from all the images corresponding to the first category, an image matching the target image according to the target image.

In this embodiment, the above executing body may obtain, from all the images corresponding to the first category, the image matching the target image according to the target image. The above image matching the target image may be the same image as the target image; or an image having a similarity satisfying a preset similarity threshold. The similarity threshold may be set based on a classification precision or may be manually set.

It should be noted that the preset image library may store images according to the first category and the second category of the first category.

In an example, "image A" is an image corresponding to the second category under the first category in the preset image library.

Step 305, determining a second category of the image matching the target image as a second category of the target image.

Step 306, determining a prediction probability of the first category of the target image.

In this embodiment, the above executing body may determine the second category of the image matching the target image as the second category of the target image.

In an example, a retrieval from all the images corresponding to the first category is performed through the target image, to obtain a matched "image B." Here, the category of "image B" is the second category under the first category. Then, the category of "image B" is determined as the second category of the target image. The above first category is a category in a plurality of categories, and the second category is a subcategory in a plurality of subcategories included in the first category.

Step 307, performing training by using the target image and the first category and by using the target image, the prediction probability of the first category and the second category, to obtain an image classification model

In this embodiment, the specific operations of steps 306 and 307 are respectively described in detail in steps 202 and 203 in the embodiment shown in Fig. 2, and thus will not be repeatedly described here.

It can be seen from Fig. 3 that, as compared with the embodiment corresponding to Fig. 2, the method for generating an image classification model in this embodiment emphasizes the determination for the second category. Thus, according to the solution described in this embodiment, all the images corresponding to the first category are first acquired from the preset image library according to the acquired first category. Then, the image matching the target image is obtained from all the images corresponding to the first category according to the target image. Next, the second category of the image matching the target image is determined as the second category of the target image. The annotation for the second category of the target image can be realized according to the first category and the target image, thereby improving the classification precision of the image classification model.

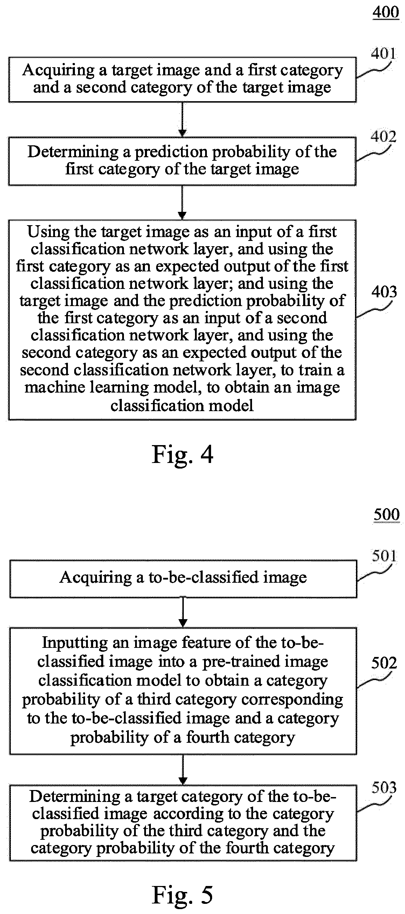

Further referring to Fig. 4, Fig. 4 illustrates a flow 400 of an embodiment of the method for generating an image classification model according to the present disclosure. The method for generating an image classification model may include the following steps:

Step 401, acquiring a target image and a first category and a second category of the target image, the first category being higher in level than the second category.

Step 402, determining a prediction probability of the first category of the target image.

Step 403, using the target image as an input of a first classification network layer, and using the first category as an expected output of the first classification network layer; and using the target image and the prediction probability of the first category as an input of a second classification network layer, and using the second category as an expected output of the second classification network layer, to train a machine learning model, to obtain an image classification model.

In this embodiment, an executing body (e.g., the terminal devices 101, 102 and 103 or the server 105 shown in Fig. 1) of the method for generating an image classification model may use the target image as the input of the first classification network layer, and use the first category as the expected output of the first classification network layer; and use the target image and the prediction probability of the first category as the input of the second classification network layer, and use the second category as the expected output of the second classification network layer, to train the machine learning model, to obtain the image classification model.

In this embodiment, the specific operations of steps 401-402 are respectively described in detail in steps 201-202 in the embodiment shown in Fig. 2, and thus will not be repeatedly described here.

It can be seen from Fig. 4 that, as compared with the embodiment corresponding to Fig. 3, the method for generating an image classification model in this embodiment emphasizes the training for the model. Thus, according to the solution described in this embodiment, the target image is used as the input of the first classification network layer, and the first category is used as the expected output of the first classification network layer; and the target image and the prediction probability of the first category are used as the input of the second classification network layer, and the second category is used as the expected output of the second classification network layer, to train the machine learning model, thus implementing the training for the image classification model.

Further referring to Fig. 5, Fig. 5 illustrates a flow 500 of an embodiment of a method for classifying an image according to the present disclosure. The method for classifying an image may include the following steps:
Step 501, acquiring a to-be-classified image.

In this embodiment, an executing body (e.g., the terminal devices 101, 102 and 103 or the server 105 shown in Fig. 1) of the method for classifying an image may acquire the to-be-classified image. The above to-be-classified image may be an image required to be classified.

Step 502, inputting an image feature of the to-be-classified image into a pre-trained image classification model to obtain a category probability of a third category corresponding to the to-be-classified image and a category probability of a fourth category.

In this embodiment, the above executing body may input the to-be-classified image into the pre-trained image classification model, to obtain the category probability of the corresponding third category and the category probability of the corresponding fourth category. The above image classification model may be used to determine the category of the to-be-classified image, to implement the classification for the to-be-classified image. The category probability of the third category and the category probability of the fourth category may be probabilities outputted by the image classification model.

It should be noted that the pre-trained image classification model may be a model trained and obtained through the method for generating an image classification model. The third category may be higher in level than the fourth category.

Step 503, determining a target category of the to-be-classified image according to the category probability of the third category and the category probability of the fourth category.

It should be noted that the above image classification model may further include a feature extraction network layer. Here, the feature extraction network layer may be used to extract the image feature of the to-be-classified image.

In this embodiment, the above executing body may determine the target category of the to-be-classified image according to the category probability of the third category and the category probability of the fourth category. The above target category may be the category of the to-be-classified image.

In this embodiment, the classification for the to-be-classified image may be implemented based on the category probability of the third category and the category probability of the fourth category that are outputted by the image classification model.

In some alternative implementations of this embodiment, the inputting an image feature of the to-be-classified image into a pre-trained image classification model to obtain a category probability of a third category corresponding to the to-be-classified image and a category probability of a fourth category includes: inputting the image feature of the to-be-classified image into a first classification network layer of the image classification model to obtain the category probability of the third category corresponding to the to-be-classified image; and inputting the category probability of the third category and the image feature of the to-be-classified image into a second classification network layer of the image classification model to obtain the category probability of the fourth category.

In this implementation, the above executing body may first input the image feature of the to-be-classified image into the first classification network layer of the image classification model to obtain the category probability of the third category corresponding to the to-be-classified image; and then input the category probability of the third category and the image feature of the to-be-classified image into the second classification network layer of the image classification model to obtain the category probability of the fourth category.

In this implementation, the determination for the category probability of the third category and the category probability of the fourth category may be implemented through the first classification network layer and the second classification network layer in the image classification model.

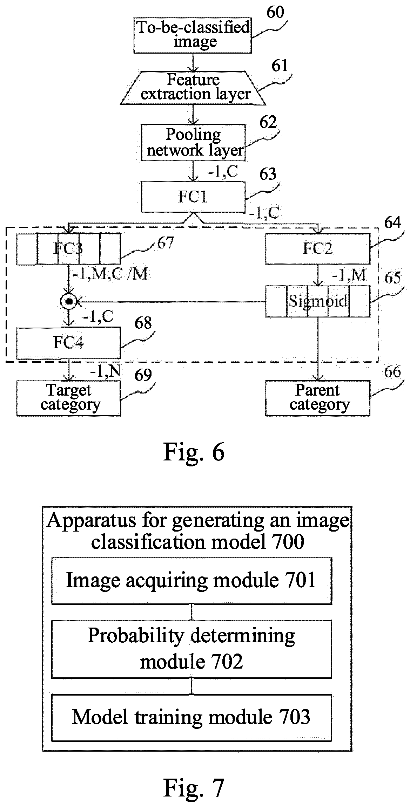

Further referring to Fig. 6, Fig. 6 is a schematic diagram of an application scenario of the method for classifying an image according to the present disclosure. In the application scenario, an image classification model includes a feature extraction network layer 61 (backbone), and the feature extraction network layer 61 may be used to perform a feature extraction on a to-be-classified image 60 (Image) to obtain an image feature of the to-be-classified image. Then, a pooling network layer 62 (AVEPool) performs downsampling or a spatial feature dimension reduction on the image feature of the to-be-classified image, to obtain a global feature. Thereafter, a first fully connected layer 63 (FC1) may perform mapping on the global feature, to isolate the input and output of the first fully connected layer. Then, a second fully connected layer 64 (FC2) processes the outputted feature of the first fully connected layer, to obtain an initial category probability of a parent category, and then, normalization processing is performed on the initial category probability of the parent category through Sigmoid 65, to obtain the category probability 66 of the parent category after the normalization. Thereafter, a third fully connected layer 67 (FC3) performs child-category feature mapping on the output of the first fully connected layer. Then, the category probability of the parent category and the feature outputted by the third fully connected layer are fused to obtain a candidate feature. Next, a fourth fully connected layer 68 (FC4) processes the candidate feature to obtain a category probability of a child category. Then, a target category 69 of the to-be-classified image is determined according to the category probability of the child category and the category probability of the parent category.

It should be noted that, for backbone, a structure such as Resnet and MobileNet may be selected. Here, "C" in Fig. 6 is a number of channels, "M" is a number of classifications of the parent category, and "N" is a maximum number of child categories.

Further referring to Fig. 7, as an implementation of the method shown in the above drawings, the present disclosure provides an embodiment of an apparatus for generating an image classification model. The embodiment of the apparatus corresponds to the embodiment of the method shown in Fig. 2. The apparatus may be applied in various electronic devices.

As shown in Fig. 7, the apparatus 700 for generating an image classification model in this embodiment may include: an image acquiring module 701, a probability determining module 702 and a model training module 703. Here, the image acquiring module 701 is configured to acquire a target image and a first category and a second category of the target image, the first category being higher in level than the second category. The probability determining module 702 is configured to determine a prediction probability of the first category of the target image. The model training module 703 is configured to perform training by using the target image and the first category and by using the target image, the prediction probability of the first category and the second category to obtain an image classification model.

In this embodiment, for specific processes of the image acquiring module 701, the probability determining module 702 and the model training module 703 in the apparatus 700 for generating an image classification model, and their technical effects, reference may be respectively made to relative descriptions of steps 201-203 in the corresponding embodiment of Fig. 2, which will not be repeatedly described here.

In some alternative implementations of this embodiment, the image acquiring module includes: a category acquiring unit, configured to acquire the target image, the category acquiring unit being further configured to acquire the first category of the target image; and a category determining unit, configured to determine the second category of the target image according to the first category and the target image.

In some alternative implementations of this embodiment, the category determining unit is further configured to: acquire, from a preset image library, all images corresponding to the first category according to the first category; obtain, from all the images corresponding to the first category, an image matching the target image according to the target image; and determine a second category of the image matching the target image as the second category of the target image.

In some alternative implementations of this embodiment, the image classification model includes a first classification network layer. The probability determining module is further configured to input the target image into the first classification network layer to obtain the prediction probability of the first of the target image.

In some alternative implementations of this embodiment, the image classification model further comprises a second classification network layer. The model training module is further configured to: use the target image as an input of the first classification network layer and use the first category as an expected output of the first classification network layer; and use the target image and the prediction probability of the first category as an input of the second classification network layer, and use the second category as an expected output of the second classification network layer, to train a machine learning model, to obtain the image classification model.

In some alternative implementations of this embodiment, a number of categories of the second category is a maximum number of categories in all second categories. Here, the first category includes all the second categories.

In some alternative implementations of this embodiment, the first category is a parent category, and the second category is a child category.

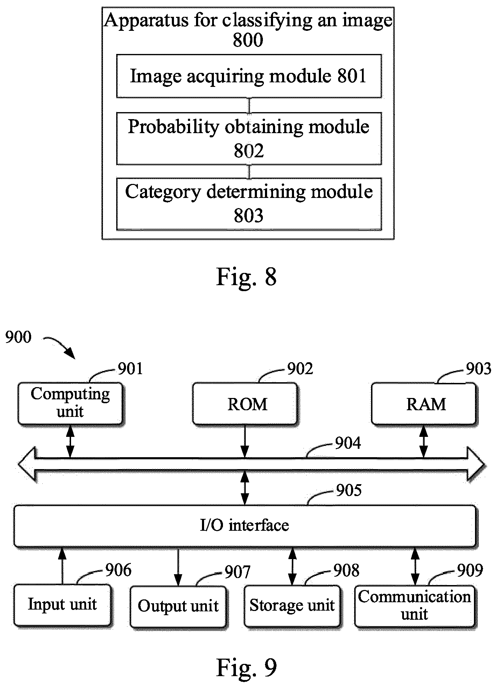

Further referring to Fig. 8, as an implementation of the method shown in the above drawings, the present disclosure provides an embodiment of an apparatus for classifying an image. The embodiment of the apparatus corresponds to the embodiment of the method shown in Fig. 5. The apparatus may be applied in various electronic devices.

As shown in Fig. 8, the apparatus 800 for classifying an image in this embodiment may include: an image acquiring module 801, a probability obtaining module 802 and a probability determining module 803. Here, the image acquiring module 801 is configured to acquire a to-be-classified image. The probability obtaining module 802 is configured to input an image feature of the to-be-classified image into a pre-trained image classification model, to obtain a category probability of a third category corresponding to the to-be-classified image and a category probability of a fourth category. The probability determining module 803 is configured to determine a target category of the to-be-classified image according to the category probability of the third category and the category probability of the fourth category.

In this embodiment, for specific processes of the image acquiring module 801, the probability obtaining module 802 and the probability determining module 803 in the apparatus 800 for classifying an image, and their technical effects, reference may be respectively made to relative descriptions of steps 501-503 in the corresponding embodiment of Fig. 5, which will not be repeatedly described here.

In some alternative implementations of this embodiment, the probability obtaining module is further configured to: input the image feature of the to-be-classified image into a first classification network layer of the image classification model to obtain the category probability of the third category corresponding to the to-be-classified image; and input the category probability of the third category and the image feature of the to-be-classified image into a second classification network layer of the image classification model to obtain the category probability of the fourth category.

According to an embodiment of the present disclosure, the present disclosure further provides an electronic device, a readable storage medium, a computer program product, a roadside device and a cloud control platform.

Fig. 9 is a schematic block diagram of an exemplary electronic device 900 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 9, the electronic device 900 includes a computation unit 901, which may execute various appropriate actions and processes in accordance with a computer program stored in a read-only memory (ROM) 902 or a computer program loaded into a random access memory (RAM) 903 from a storage unit 908. The RAM 903 also stores various programs and data required by operations of the device 900. The computation unit 901, the ROM 902 and the RAM 903 are connected to each other through a bus 904. An input/output (I/O) interface 905 is also connected to the bus 904.

The following components in the electronic device 900 are connected to the I/O interface 905: an input unit 906, for example, a keyboard and a mouse; an output unit 907, for example, various types of displays and a speaker; a storage device 908, for example, a magnetic disk and an optical disk; and a communication unit 909, for example, a network card, a modem, a wireless communication transceiver. The communication unit 909 allows the device 900 to exchange information/data with an other device through a computer network such as the Internet and/or various telecommunication networks.

The computation unit 901 may be various general-purpose and/or special-purpose processing assemblies having processing and computing capabilities. Some examples of the computation unit 901 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 901 performs the various methods and processes described above, for example, the method for generating an image classification model or classifying an image. For example, in some embodiments, the method for generating an image classification model or classifying an image may be implemented as a computer software program, which is tangibly included in a machine readable medium, for example, the storage device 908. In some embodiments, part or all of the computer program may be loaded into and/or installed on the device 900 via the ROM 902 and/or the communication unit 909. When the computer program is loaded into the RAM 903 and executed by the computation unit 901, one or more steps of the above method for generating an image classification model or classifying an image may be performed. Alternatively, in other embodiments, the computation unit 901 may be configured to perform the method for generating an image classification model or classifying an image through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein maybe implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server maybe a cloud server, a distributed system server, or a server combined with a blockchain.

In the context of the present disclosure, in addition to the above electronic device, the roadside device may include a communication part, and the like. The electronic device may be integrated with the communication part, or may be provided separately. The electronic device may acquire data of a perceptive device (e.g., a roadside camera), for example, a picture and a video, to perform image and video processing and a data calculation. Alternatively, the above electronic device itself may also have a perception data acquisition function and a communication function, for example, an artificial intelligence (AI) camera, and the electronic device may directly perform the image and video processing and the data calculation based on the acquired perception data.

In the context of the present disclosure, the cloud control platform performs processing in the cloud, and the cloud control platform includes the above electronic device, and thus may acquire data of a perceptive device (e.g., a roadside camera), for example, a picture and a video, to perform image and video processing and a data calculation. The cloud control platform may also be referred to as a vehicle infrastructure cooperation management platform, an edge computing platform, a cloud computing platform, a central system, a cloud server, etc.

Artificial intelligence is a discipline of researching how to make a computer simulate certain thinking processes and intelligent behaviors (e.g., learning, reasoning, thinking and planning) of humans, which has technologies not only at the hardware level but also at the software level. Artificial intelligence hardware technologies generally include technologies such as a sensor, a dedicated artificial intelligence chip, cloud computing, distributed storage and big data processing. Artificial intelligence software technologies mainly include a computer vision technology, a speech recognition technology, a natural speech processing technology, machine learning/deep learning, a big data processing technology, a knowledge graph technology, etc.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions maybe made depending on design requirements and other factors. Any modification, equivalent and modification that fall within the spirit and principles of the present disclosure are intended to be included within the scope of the present disclosure.

## Claims

1. A method for generating an image classification model, comprising:
acquiring (201) a target image and a first category and a second category of the target image, the first category being higher in level than the second category;
determining (202) a prediction probability of the first category of the target image; and
performing (203) training by using the target image and the first category and by using the target image, the prediction probability of the first category and the second category to obtain an image classification model.

2. The method according to claim 1, wherein the acquiring (201) a target image and a first category and a second category of the target image comprises:
acquiring (301) the target image;
acquiring (302) the first category of the target image; and
determining the second category of the target image according to the first category of the target image and the target image.

3. The method according to claim 2, wherein the determining the second category of the target image according to the first category of the target image and the target image comprises:
Acquiring (303), from a preset image library, all images corresponding to the first category according to the first category;
Obtaining (304), from all the images corresponding to the first category, an image matching the target image according to the target image; and
determining (305) a second category of the image matching the target image as the second category of the target image.

4. The method according to any one of claims 1-3, wherein the image classification model comprises a first classification network layer, and
the determining (202) a prediction probability of the first category of the target image comprises:
inputting the target image into the first classification network layer to obtain the prediction probability of the first of the target image.

5. The method according to claim 4, wherein the image classification model further comprises a second classification network layer, and
the performing (203) training by using the target image and the first category and by using the target image, the prediction probability of the first category and the second category to obtain an image classification model comprises:
using (403) the target image as an input of the first classification network layer and using the first category as an expected output of the first classification network layer; and using the target image and the prediction probability of the first category as an input of the second classification network layer, and using the second category as an expected output of the second classification network layer, to train a machine learning model, to obtain the image classification model.

6. The method according to any one of claims 1-5, wherein a number of categories of the second category is a maximum number of categories in all second categories, the first category comprises all the second categories, the first category is a parent category, and the second category is a child category.

7. A method for classifying an image, comprising:
acquiring (501) a to-be-classified image;
inputting (502) an image feature of the to-be-classified image into the image classification model according to any one of claims 1-7 to obtain a category probability of a third category corresponding to the to-be-classified image and a category probability of a fourth category; and
determining (503) a target category of the to-be-classified image according to the category probability of the third category and the category probability of the fourth category.

8. The method according to claim 7, wherein the inputting (502) an image feature of the to-be-classified image into the image classification model according to any one of claims 1-6 to obtain a category probability of a third category corresponding to the to-be-classified image and a category probability of a fourth category comprises:
inputting the image feature of the to-be-classified image into a first classification network layer of the image classification model to obtain the category probability of the third category corresponding to the to-be-classified image; and
inputting the category probability of the third category and the image feature of the to-be-classified image into a second classification network layer of the image classification model to obtain the category probability of the fourth category.

9. An apparatus for generating an image classification model, comprising:
an image acquiring module (701), configured to acquire a target image and a first category and a second category of the target image, the first category being higher in level than the second category;
a probability determining module (702), configured to determine a prediction probability of the first category of the target image; and
a model training module (703), configured to perform training by using the target image and the first category and by using the target image, the prediction probability of the first category and the second category to obtain an image classification model.

10. An apparatus for classifying an image, comprising:
an image acquiring module (801), configured to acquire a to-be-classified image;
a probability obtaining module (802), configured to input an image feature of the to-be-classified image into the image classification model according to any one of claims 1-6, to obtain a category probability of a third category corresponding to the to-be-classified image and a category probability of a fourth category; and
a probability determining module (803), configured to determine a target category of the to-be-classified image according to the category probability of the third category and the category probability of the fourth category.

11. An electronic device, comprising:
at least one processor; and
a storage device, communicated with the at least one processor, wherein the storage device stores an instruction executable by the at least one processor, and the instruction is executed by the at least one processor, to enable the at least one processor to perform the method according to any one of claims 1-8.

12. A non-transitory computer readable storage medium, storing a computer instruction, wherein the computer instruction is used to cause a computer to perform the method according to any one of claims 1-8.

13. A computer program product, comprising a computer program, wherein the computer program, when executed by a processor, implements the method according to any one of claims 1-8.

14. A roadside device, comprising the electronic device according to claim 11.

15. A cloud control platform, comprising the electronic device according to claim 11.
